# EUROPEAN PATENT APPLICATION

(11) **EP 4 604 623 A1**
(43) Date of publication of application: **20.08.2025**
(21) Application number: 24158295.6
(22) Date of filing: 19.02.2024
(51) Int. Cl.: H04W 52/02

(54) **AMBIENT IOT DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KANG, Yang, Singapore 469332 (SG); MAKI, Shotaro, Osaka, 571-8501 (JP)
(74) Representative: Grünecker Patent- und Rechtsanwälte PartG mbB

(57) **Abstract**

It is provided an Internet of Things, IoT, device comprising circuitry which, in operation, generates an indication related to a future transmission or future reception of data by the IoT device and a transceiver which, in operation, transmits the indication to a node. Further, it is provided a node comprising a transceiver which, in operation, receives, from an Internet of Things, IoT, device an indication related to a future transmission or future reception of data by the IoT device and circuitry which, in operation controls the future transmission or future reception of the data according to said indication.

## Description

### BACKGROUND

### 1. Technical field

The present disclosure relates to an A-loT device and its communication with a node, for example, a base station or an intermediate node connected to a base station.

### 2. Description of the Related Art

The Internet of things (loT) market is a major source of revenue for future wireless technology and is a steadily growing market. Building and commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with new specifically designed new operation states.

### SUMMARY

One non-limiting and exemplary embodiment facilitates an ambient Internet of Things, A-loT, device communicating with a node.

In an embodiment, the techniques disclosed herein feature: An A-loT device, comprising circuitry which, in operation, generates an indication (for example, a message or part of a message) related to a future transmission or future reception of data (for example, user data, application data, payload and/or control information) by the A-loT device and a transceiver which, in operation, transmits the indication to a node, for example, a base station or an intermediate node connected to a base station.

In another embodiment, the techniques disclosed herein feature: A node, for example a base station or an intermediate node connected to a base station, comprising a transceiver which, in operation, receives, from an A-loT device an indication (for example, a message or part of a message) related to a future transmission or future reception of data (for example, user data, application data, payload and/or control information) by the A-loT device and circuitry which, in operation, controls the future transmission or future reception according to said indication.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-loT device topology;
- **Fig. 3**: illustrates another node-A-loT device topology;
- **Fig. 4**: illustrates a method of either transmitting a data message or information on the energy status by an A-loT device to a node depending on the energy level available for the A-loT device;
- **Fig. 5**: illustrates a method of transmitting a maximum application message size by an A-loT device to a node;
- **Fig. 6**: illustrates a method of transmitting a data profile by an A-loT device to a node;
- **Fig. 7**: illustrates a method of transmitting information on a future transition from one operation state to another operation state by an A-loT device to a node;
- **Fig. 8**: illustrates a general, simplified and exemplary block diagram of an A-loT device and a node;
- **Fig. 9**: illustrates functional structure of the circuitries pertaining to the A-loT device and the base station; and
- **Fig. 10**: shows exemplary functional split options in 5G O-RAN.

### DETAILED DESCRIPTION

### 5G NR system architecture and protocol stacks

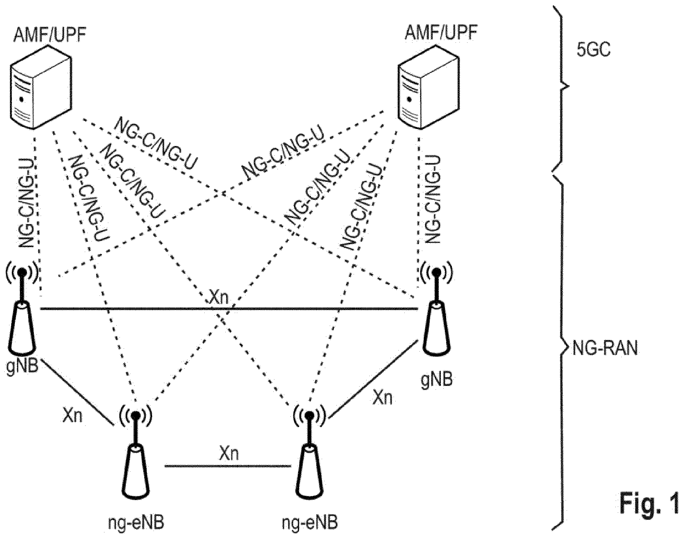

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

The present disclosure relates to an A-loT device, a base station, and an intermediate node connected to a base station methods of communication between the A-loT device and the base station and the A-loT device and the intermediate node.

### Topologies

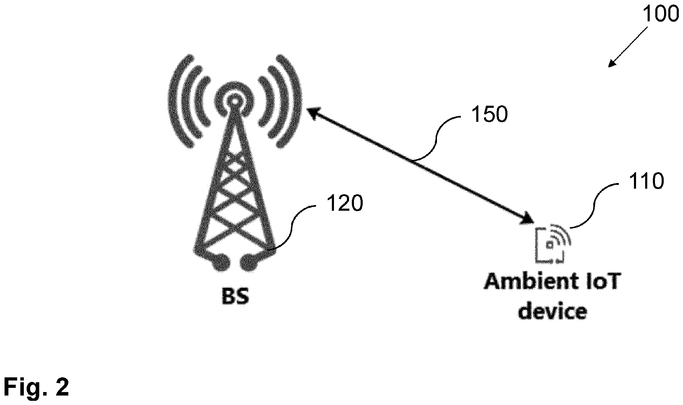

Particularly, two different topologies are exemplarily considered in this disclosure. In a first topology 100 as illustrated in Figure 2, an A-loT device 110 directly and bidirectionally communicates with a base station 120 over a wireless channel 150. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station may still include communication via one or more distributed units, DU, of the base stations. A base station may operate one or more cells.

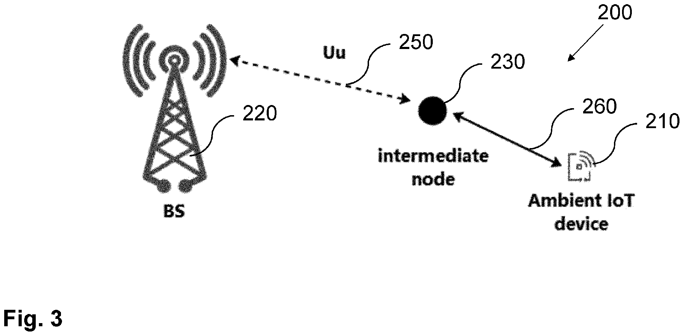

In a second topology as illustrated in Figure 3, an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-IoT device originated. The BS 220 may communicate with the intermediate node 230 via a first interface 250. In Fig. 2 this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Embodiment 1

In these embodiments, an loT device transmits relevant information regarding subsequent data transmission(s)/reception(s).

It is provided an (ambient) Internet of Things, A-loT, device, comprising circuitry which, in operation, generates (is configured to generate) an indication (for example, message or part of a message) related to a future transmission or future reception of data (for example, user data, application data, a payload or control data) by the A-loT device and a transceiver which, in operation, transmits (is configured to transmit) the indication generated by the circuitry to a node, for example, a base station or intermediate node.

Thus, the A-loT device transmits relevant information regarding a future transmission/reception to facilitate the base station to properly schedule (communication with) the A-loT device and/or provide harvesting carrier wave based on the indication received from the A-loT device.

The scheduling may include scheduling of data transmission and/or data reception.

### Embodiment 2

According to a second embodiment, the indication of embodiment 1 comprises time related information regarding an operation state of the A-loT. Here, and in the following, an operation state of the A-loT device may be one of a group of states comprising a ready to send and/or receive data, switched off, switched on, charging or energy harvesting, low battery power, stand by, sleep, communicating, or not communicating state. It is noted that the present disclosure is not limited to any particular units of time. For example, the units of time may be system units in time domain such as subframes or frames or scheduling cycles or the like. Alternatively, the units of time may be universal time units such as seconds, milliseconds, or the like.

In this embodiment, the time related information can be expressed relative to a previous wake-up event, relative to the time left until transit of an operation state to another, for example, until transit to power OFF, or in terms of an absolute time, for example, given by a frame number or slot number.

According to an implementation, the time related information indicates a time the A-loT device is to wake up from a sleep state or turn on its radio to enable transmitting/receiving data (for example, user data, application data, payload and/or control information). For example, the A-loT device is in a power OFF state, harvesting mode, or not synchronized completely. In these situations, the A-loT device may not be able to transmit/receive data. The A-loT device can transmit an indication of the time instance or the time duration after which the A-loT device will be ready for data transmission/reception. Thus, the node is enabled to perform scheduling accordingly. For example, a gNB node or intermediate node will be informed about the time when the A-loT device will be able to communicate. Particularly, it can be avoided that the gNB node or intermediate node triggers the A-loT device unnecessarily which prevents consumption of electric energy of the A-loT device in vain.

According to a further implementation, the time related information indicates time the A-loT device is to turn off its radio or is to transmit and/or receive data (for example, user data, application data, payload and/or control information). The A-loT device might need to turn off the radio, transit to another operation state (for example, to a harvesting energy state), or resynchronize at certain times. In these situations, the A-loT device may not be able to transmit/receive data after the indicated time instance. The A-loT can transmit an indication for the time instance or the time duration after which the A-loT device will not be ready for transmission/reception. The node (for example, gNB or intermediate node) can transmit data (for example, user data, application data, payload and/or control information) or trigger the data reception before the indicated time instance (at which the A-loT device turns off its radio, for example). For example, the gNB node or intermediate node can transmit a request to the A-loT device to turn off the radio earlier/later than the reported time instance. In this implementation, the node will be informed about the time at which the A-loT device will not be able to communicate. The node can, accordingly, schedule the data transmission/reception before the indicated time. Further, it can be reliably avoided that the node triggers the A-loT device unnecessarily which prevents consumption of electric energy of the A-loT device in vain.

According to a further implementation, the time related information indicates time the A-loT device will have data (for example, user data, application data, payload and/or control information) available for transmission(s)/reception(s). The A-loT device can send a time indication, for example, based on application data and/or control information when it intends to transmit/receive data. As an example, the A-loT device runs an application that generates periodic data. Based on the application, it can generate an indication for the node when it has application data or control information for the transmission. According to another example, the A-loT device runs an application that needs to receive updated data information after the expiry of application data. The A-loT device can send an indication regarding the time instance that it needs to receive new application data. By indicating when the A-loT device has data for transmission/reception, the node can schedule the transmissions/reception on time. Further, it can be reliably avoided that the node triggers the A-loT device unnecessarily which prevents consumption of electric energy of the A-loT device in vain. In addition, the interference in the system can be reduced.

According to a further implementation, the time related information indicates at what time the A-loT device will have or if the A-loT device has a sufficient amount of electric energy (a sufficient charging level) to transmit/receive data (for example, user data, application data, payload and/or control information). The A-loT device may not have enough energy for transmitting/receiving data. Thus, it can send a time indication indicating when it will have enough energy for transmitting/receiving data, for example, based on a current energy level, a future (expected) energy level and/or an energy harvesting rate. The A-loT device may transmit such information in the beginning or early part of message transmission(s) in order to inform the node about (the possibility of) energy shortage. Alternatively, the information could be carried in the end or close to the end part of a message transmission in order to take into account the latest actual situation. The information could be also distributed over the message in order to have time diversity. The node can maintain providing an energy harvest signal (for example, in form of a carrier wave) to the A-loT device until the A-loT device has enough energy to perform data transmission/reception. Before that the node does not have to expect receiving any data/signal from the A-loT device. It can be reliably avoided that the node triggers the A-loT device unnecessarily which prevents consumption of electric energy of the A-loT device in vain. In addition, the node does not need to monitor the A-loT link until the indicated time instance has occurred as it does not have to expect receiving any data/signal from the A-loT device.

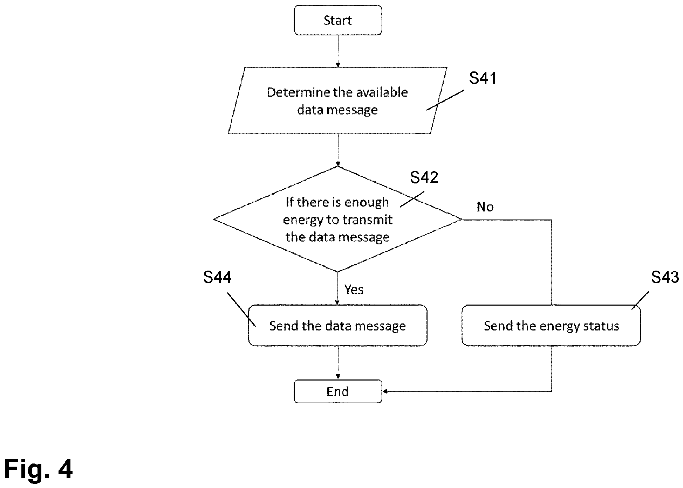

**Fig. 4** illustrates a method of either transmitting a data message or information on the energy status by an A-loT device to a node depending on the energy level available for the A-loT device. When the A-loT device is expected to/intends to transmit a data message to the node, it determines S41 the (size of the) available data message and determines S42 whether there is enough energy available to transmit the data message. If there is not enough energy available for the transmission of the data message, the A-loT device transmits S43 an indication on its current energy level. If there is enough energy available for the transmission of the data message, the A-loT device transmits S44 the data message to the node.

According to a further implementation, the time related information indicates a time interval during which the A-loT device does not intend to transmit and/or receive data (for example, user data, application data, payload and/or control information) or any signal (maybe, apart from an energy harvest signal). The A-loT device can transmit a time indication indicating a time instance or time duration at which it does not intend to transmit data to the node. Using the indication received from the A-loT device the node can schedule the A-loT device for device terminated data reception. Based on the indication the node can configure the A-loT device to transit to a proper operation state, for example, sleep state or harvesting energy state. Using the indication allows the node to set a proper operation state for the A-loT device. Further, the node can schedule the A-loT device according to the received indication.

It is noted that in this embodiment as well as in the embodiments described in the following individual implementations of an embodiment and of other embodiments can be combined with each other where considered appropriate. For example, the loT device may be able to transmit more than one indication (e.g. related to active time and inactive time) in one message or separately to the gNB. The gNB may be correspondingly able to receive and use the more than one indication for scheduling.

### Embodiment 3

According to a third embodiment, the indication of embodiment 1 comprises information on at least one of a size of the data, periodicity of the data, and number of data transmissions and/or receptions (number of transmission and/or reception events/occurrences/rounds).

According to an implementation, this information comprises information on a size/periodicity of the data (for example, user data, application data, payload and/or control information) that the A-loT device intends to transmit in the next transmission event(s)/occurrence(s). The data size can be indicated as a number of bits, bytes octets, or transport blocks. The A-loT device can transmit information on the size of available data to be transmitted. Such information could be used by the node to schedule the transmissions. The node can also estimate the time instance/duration it should provide the harvesting energy for the A-loT device to enable the transmission with the indicated number of bits. The information received from the A-loT device can be used by the node to properly schedule the A-loT device and provide sufficient harvesting energy (for example, in form of a carrier wave).

According to another implementation, the information on at least one of a size of the data, periodicity of the data, and number of data transmissions and/or receptions comprises information on the size/periodicity of the data that the A-loT device can transmit/receive (capability of transmission/reception) in the next transmission event(s)/occurrence(s). The capability of transmission/reception may at least be determined by a current or future (expected) energy level available. The data size can be indicated as a number of bits, bytes, octets, or transport blocks.

The A-loT device can transmit information on the maximum size of data (for example, user data, application data, payload and/or control information) that can be transmitted/received in the subsequent transmission/reception event(s)/round(s), for example, based on the available energy. Particularly, this maximum data size may be different from the maximum data size that the physical channel used for the communication between the A-loT device and the node can carry. Such information could be used by the node to schedule the transmission(s)/reception(s). If the number of available transmission bits is higher than the indicated one, the node can provide the harvesting carrier wave after the transmission/reception (events/round(s)). The information provided by the A-loT device can be used by the node to properly schedule the A-loT device and provide sufficient harvesting energy to the A-loT device.

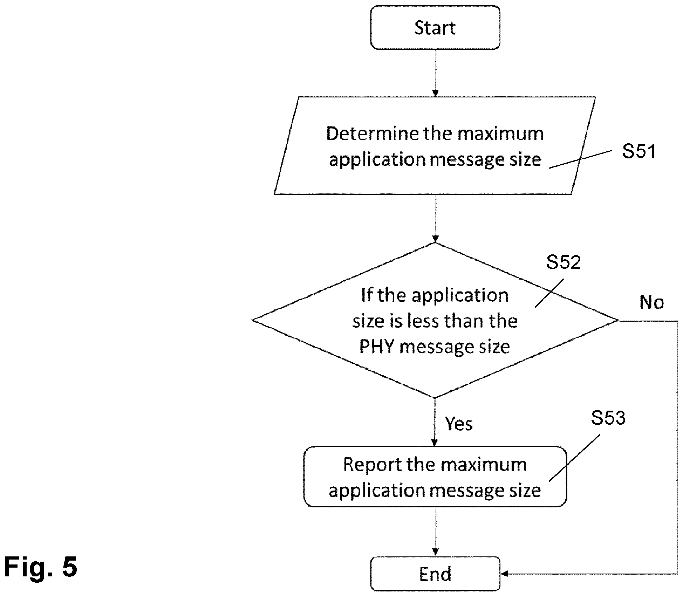

**Fig. 5** illustrates a method of transmitting a maximum application message size by an A-loT device to a node. The A-loT device determines S51 a maximum application message size. It is determined S52 whether the determined application message size is less than the maximum data size that the physical channel used for the communication between the A-loT device and the node can carry, and if so, the A-loT device reports S53 maximum application message size to the node. The node, accordingly, schedules the further transmission(s)/reception(s).

According to another implementation, the information on at least one of a size of the data, periodicity of the data, and number of data transmissions and/or receptions comprises information on the (preferred/possible) maximum data size for each transmission/reception event/occurrence. The data size can be indicated by as a number of bits, bytes, octets, or transport blocks.

The A-loT device can transmit information on the preferred maximum size of data (for example, user data, application data, payload and/or control information) to be transmitted/received in the subsequent transmission/reception event(s)/round(s), for example, based on an application, device capability or energy harvesting capability of the A-loT device. For instance, the A-loT device runs an application that generates periodic traffic with a fixed number of data bits (for example, 100 bits). For instance, the A-loT device can only harvest energy that is sufficient to transmit 100 bits of information. For instance, the A-loT device can only process 100 bits of information in each transmission (event/round). Under such conditions, the A-loT device can indicate the maximum number of 100 bits for the communications to the node. The node can use this information when scheduling the A-loT device. For instance, in order to deliver 150 bits, the node can, consequently, schedule two transmission events/rounds for the A-loT device for the given example.

The A-loT device may run an application with periodic traffic and a fixed message size. The A-loT device can report on such information to the node, for instance, when the A-loT device restarts or starts running an application. The traffic characteristics (such as periodicity and message sizes) could be pre-defined as an A-loT device profile. The A-loT device can choose the profile index based on an application and report it to the node. A-loT devices with different characteristics and capabilities can, thus, readily be deployed in a communication network. The information can be used by the node to schedule the A-loT device with a required number of transmission/reception events/rounds.

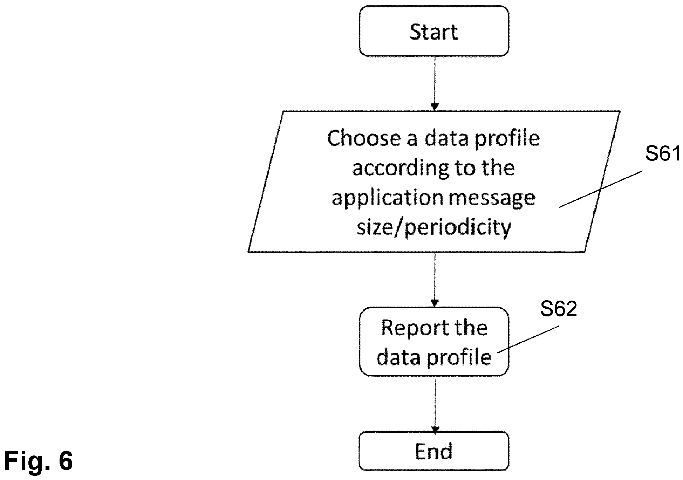

**Fig. 6** illustrates a method of transmitting a data profile by an A-loT device to a node. The A-loT device chooses S61 a data profile according to the application message size and/or periodicity and reports S62 the chosen data profile to the node.

According to another implementation, the information on at least one of a size of the data, periodicity of the data, and number of data transmissions and/or receptions comprises information on how many transmission events/occurrences (rounds) the A-loT device needs to perform in order to have a full message communicated between the A-loT device and the node, for example, the base station or the intermediate node. The A-loT device can transmit information on the number of required transmission/reception events/rounds, for instance, based on the available data/control information bits, the maximum data bits that could be carried in each event/round, and available energy. Such information can be used by the node to properly schedule the A-loT device transmissions/reception.

According to another implementation, the information on at least one of a size of the data, periodicity of the data, and number of data transmissions and/or receptions comprises information on how many transmission/reception events/occurrences (rounds) the A-loT device can perform, for example, in view of a current or future (expected) energy level available. The A-loT device can transmit the information on the number of transmission/reception events/rounds that can be performed, for instance, based on the available energy. Using this information, the node can learn whether it needs to provide harvesting energy to the A-loT device after performing the indicated number of transmission/reception events/rounds. Such information can be used by the node to schedule the A-loT device transmission(s)/reception(s) and provide sufficient harvesting energy to the same.

### Embodiment 4

According to a fourth embodiment, the indication of embodiment 1 comprises information on an operation state of the A-loT, for example, information indicating that the A-loT device is currently or will be in the future after some pre-defined time in a ready to send and/or receive data, switched off, switched on, charging or energy harvesting, low battery power, stand by, sleep, communicating, or not communicating state.

The A-loT device might change its operation states autonomously based on certain conditions, for example, when it re-starts or its energy is below some certain level. The A-loT device can transmit the current operation state to the node. For instance, the A-loT device is in an energy harvesting state. By receiving the indication of that state, the node can avoid scheduling the device for data transmission/reception. Meanwhile, the node can provide the harvesting signal for the A-loT device when needed. The node can take proper actions based on the knowledge of the current operation state of the A-loT device.

### Embodiment 5

According to a fifth embodiment, the indication of embodiment 1 comprises information on a future (for example, next) transition from a current operation state of the A-loT to a future operation state of the A-loT, for example, transition from one of the ready to send and/or receive data, switched off, switched on, charging or energy harvesting, low battery power, stand by, sleep, communicating, or not communicating states to another one of these operation states.

The A-loT device might change its operation states autonomously based on certain conditions or when it is requested by the node. The A-loT device can transmit the intended state transition to the node. For instance, the node can request that the A-loT device turns its radio ON. If the A-loT device is able to do that (for example, has enough energy and is synchronized with the communication network), it will signal its future state transmission. The node can, subsequently, initiate communication with the A-loT device. The node can take proper actions knowing the future state transition of the A-loT device.

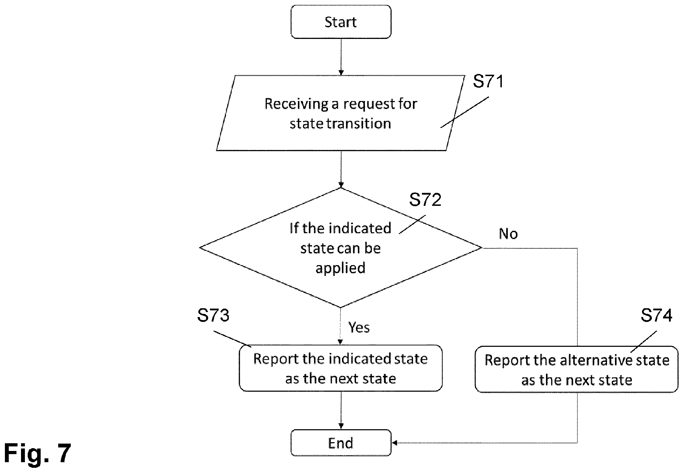

**Fig. 7** illustrates a method of transmitting information on a future transition from one operation state of an A-loT device to another operation state by the A-loT device to a node. In the example shown in **Fig. 7****,** the A-loT device receives S71 a request for transition of operation state, for example, in order to transmit data. The A-loT device determines S72 whether the requested state transition is possible, for example, based on an actual or future (expected) energy level available. If the requested state transition is possible, the A-loT device reports S73 the indicated (as requested by the node) operation state as the next operation state to be adopted. If the requested state transition is not possible, the A-loT device reports S74 to the node on an alternative operation state (for example, an energy harvesting state) that is considered more appropriate by the A-loT device as the next operation state.

### Embodiment 6

According to a sixth embodiment, the indication of embodiment 1 comprises information related to electric energy used for powering the A-loT.

According to an implementation, the information related to electric energy used for powering the A-loT comprises information on an energy (charge) status of the A-loT device, for example, full, half full, low, high, empty, etc., or information indicating that the A-loT device is harvesting energy or is not harvesting energy. The A-loT device has a limited energy capacity that affects communication with the node. The A-loT device can report its energy status. Such information can be used by the node to properly schedule the A-loT device or set it into a proper operation state. The node can use the received information on the energy status of the A-loT device to configure the operation state of the A-loT device and/or any communication with the same.

According to another implementation, the information related to electric energy used for powering the A-loT comprises information on an energy harvesting rate. The A-loT device has limited energy capacity and needs to harvest energy, for example, from the physical environment or an electromagnetic signal (for example, a carrier wave signal) transmitted by the node (energy harvest signal). The rate of energy harvesting depends on different parameters. The A-loT device can report on the harvesting rate to the node. Using such information, the node can estimate how long the A-loT device needs to harvest energy before it will be able to transmit/receive data with a given message size. The node can estimate the required harvesting duration before performing/initiating data transmission/reception.

### Embodiment 7

According to a seventh embodiment, the indication of embodiment 1 comprises an energy request related to at least one of an energy level and duration of a future energy harvest signal to be sent by the node. In this case, a signal transmitted by the node serves as an energy resource for the A-loT device. For example, the A-loT device transmits a request for increasing or decreasing the energy of an energy harvest signal transmitted by the node. In case the A-loT device does not have enough energy for communication, it can transmit an indication in form of or comprising a request to increase the harvesting signal energy/duration. The node can, accordingly, adopt the harvesting energy/duration. If the A-loT device has enough energy, it can send an indication in form of or comprising a request to reduce the harvesting energy/duration. The node can properly adjust the harvesting signal energy/duration according to the need of the A-loT device.

### Embodiment 8

According to an eight embodiment, the transceiver, in operation, receives a request from the node and the circuitry, in operation, generates the indication in response to the reception of the request by the transceiver. Thus, generation and, thus, transmission of the indication is triggered by the node. Alternatively, the A-loT device initiates transmission of the indication by itself without triggering by the node.

### Embodiment 9

According to a ninth embodiment, the A-loT device further comprises a power management unit which, in operation, harvests electric energy from an energy harvest signal transmitted by the node.

All of the embodiments 1 to 9 described above can be combined where considered appropriate.

Different indication and information may be transmitted to the node for payload/user/application data transmission/reception and for control transmission/reception. Different information, for example, time information, on the availability of payload/user/application data and the availability of control information might be transmitted either jointly or separately. The indication may be transmitted (carried on a layer/channel) to the node alone or together with payload/user/application data or control signaling. Further, the indication may be transmitted when the A-loT device is not capable to perform an actual data transmission/reception and the indication and information may be transmitted before, after or during some other data transmission/reception. Furthermore, the indication and information may be within forward error correction (FEC) and cyclic redundancy check (CRC) in order to ensure correct reception at the receiver. Alternatively, the indication may not be protected by CRC and/or provided with a separate FEC in order to reduce encoding calculation load.

### Embodiment 10

According to a tenth embodiment, it is provided a node, for example, a base station or an intermediate node connected to a base station, comprising a transceiver which, in operation, receives (is configured to receive), from an ambient Internet of Things, A-loT, device an indication related to a future transmission or future reception of data by the A-loT and comprising circuitry which, in operation controls the future transmission or future reception of data according to said indication. The indication can be any of the indications described with reference to embodiments 1 to 9.

### Embodiment 11

According to an eleventh embodiment, the circuitry of the node of embodiment 10 further, in operation, schedules (is configured to schedule) the future transmission or future reception of the data based on the received indication and generates the data based on the scheduling and the transceiver, in operation, transmits the data in accordance with the scheduling.

### Embodiment 12

According to a twelfth embodiment the circuitry of embodiment 11, in operation, generates a request for requesting the A-loT to transmit at least one of data and the indication and the transceiver, in operation, transmits the request to the A-loT. If the request for transmitting the indication is transmitted to the A-loT device, the A-loT device is directly triggered to transmit the indication to the node. In another scenario the node sends a request only for transmission of data by the A-loT device and, if the A-loT device cannot provide for this transmission, it transmits an indication to the node, for example, an indication indicating that is has not enough energy available for the requested transmission.

Embodiments 10 to 12 provide advantages corresponding to the ones described with reference to embodiments 1 to 9. Embodiments 10 to 12 can be combined with each other.

In all of the above-described embodiments, the indication may be transmitted based on an appropriated protocol stack, for example, a user plane protocol stack for NR or control plane protocol stack for NR. For example, the indication is transmitted by a physical channel or MAC layer using services offered by the physical layer in terms of using transport channels.

### Further implementations

As mentioned above, some A-loT devices have a limited energy capacity. The energy could be obtained from the environment (vibration, light, heat) or a carrier wave, e.g., provided by the gNB/intermediate node. The A-loT device may not have the legacy RRC states, ARQ, and HARQ. It may implement, e.g. repetitions to increase robustness.

The A-loT device has a limited power energy; hence it may not be able to communicate at any time instance, with the desired transmission power, and with maximum allowed message size. In addition, the A-loT device may be defined/configured with various states, such as, power OFF, charging, communication, and sleep. The A-loT device may not be able to communicate in all these states. To facilitate the communication considering the mentioned limitations, the A-loT may signal relevant information for the subsequent data transmission(s) -uplink and/or downlink.

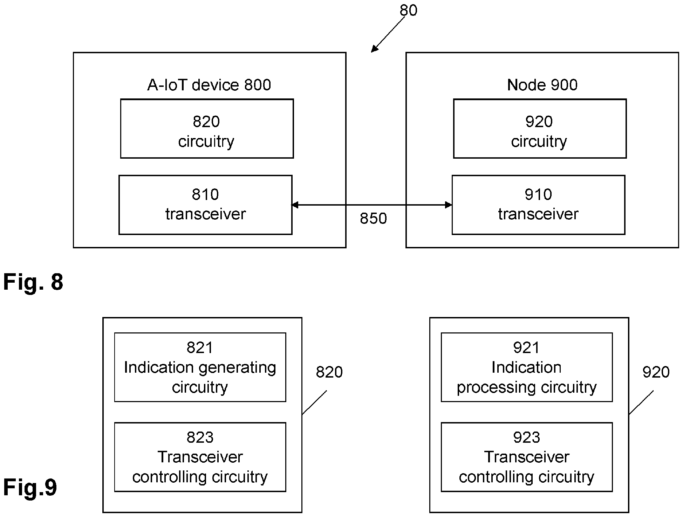

**Fig. 8** illustrates a general, simplified and exemplary block diagram of an A-loT device 800 and a node (base station or intermediate node connected to a base station) 900 forming a communication system 80. In the following, it is exemplarily assumed that node 900 is a base station functioning as a scheduling device like an eNB or gNB (network node). The A-loT device 800 may be a wearable, smart home device, automotive device, sensor, smart key, or healthcare device, for example.

The A-loT device 800 and the base station 900 (eNB/gNB) are communicating with each other over a (wireless) physical channel 850, respectively, using their transceivers 810 (UE side) and 910 (base station side). The base station 900 and the A-loT device 800 are capable of transmitting as well as receiving radio signals via the channel 850. Together, the base station 900 and the A-loT device 800 form a communication system 80, for example, a 5G or future communication system. The communication system 80 may further include other entities such as further base stations, intermediate nodes and/or A-loT devices. Any of the above-described embodiments may be implemented in the A-loT device 800, the base station 900 and/or communication system 80 where appropriate.

The A-loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the A-loT device 800, and the base station 900 to transmit and/or receive radio signals over the wireless channel 150, for example, a physical channel. Moreover, the term "circuitry" includes processing circuitry formed by one or more processors or processing units, etc.

In some embodiments, the transceiver 810 of the A-loT device 800 transmits an indication related to a future transmission or future reception of data by the A-loT to the base station 900 wherein the indication is generated by the processing circuitry 820 of the A-loT device 800.

In some embodiments, the transceiver 910 of the base station 900 receives from the A-loT, device an indication related to a future transmission or future reception of data by the A-loT 810 and the processing circuitry 920 of the base station 900 controls the future transmission or future reception of the data according to the received indication.

The circuitry may be configured by software to perform the functions as described in any of the above embodiments. As shown in Fig. 9, the circuitry 820 of the A-loT device may further comprise a functional module referred to as indication generating circuitry 821 for generating the indication. A transceiver controlling circuitry 823 is a functional module that controls the transceiver to transmit the generated indication. Moreover, as shown in Fig. 9, the circuitry 920 of the base station or an intermediate node may further comprise a functional module referred to as indication processing circuitry 921 for interpreting (decoding) the indication. A transceiver controlling circuitry 923 is a functional module that controls the transceiver to receive the generated indication.

Moreover, it is noted that the A-loT device as described in any of the above embodiments and examples, may be integrated on an integrated circuit (IS). Moreover, the integration does not necessary include the entire transceiver. The transceiver is, in general, not necessarily a part of the A-loT device. The A-loT may be connected to an external antenna (module) connected to the A-loT over a port on the A-loT device. Similar structure applies to the gNB.

Moreover, a computer program is provided including code instructions stored on a non-transitory medium, which when executed on one or more processor, causes the one or more processors to execute a method according to any of the above mentioned embodiments and examples.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

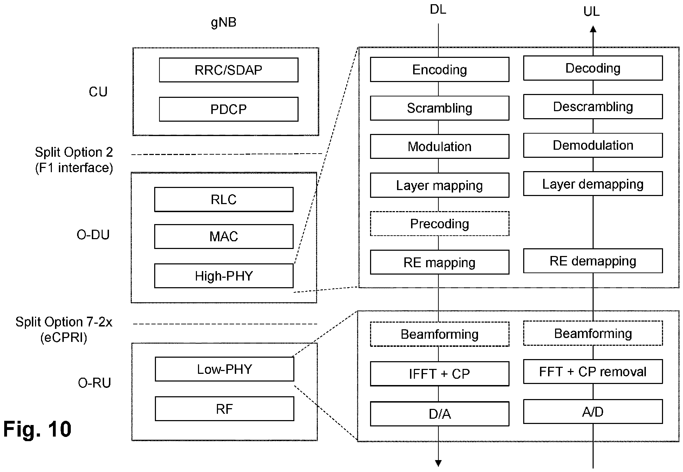

**FIG. 10** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI. Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, it is provided an Internet of Things, loT, device, comprising circuitry which, in operation, generates an indication related to a future transmission or future reception of data by the loT device and a transceiver which, in operation, transmits the indication to a node.

According to an embodiment, the indication comprises time related information regarding an operation state of the loT device. The time related information regarding an operation state may include one or more of: time the loT device is to wake up or turn on the transceiver for sending and/or receiving the data, time the loT device is to turn off the transceiver, time the loT device is to transmit and/or receive the data, time the loT device is to have sufficient amount of energy to transmit and/or receive the data, and time interval during which the loT device does not intend to transmit and/or receive the data.

According to an embodiment, the indication comprises information on at least one of a size of the data, periodicity of the data, and/or number of data transmissions and/or receptions.

According to an embodiment, the indication comprises information on a current operation state of the loT device, said operation state indicating at least one of: ready to send and/or receive data, switched off, charging, low battery power, stand by or sleep state.

According to an embodiment, the indication comprises information on a future transition from a current operation state of the loT device to a future operation state of the loT device.

According to an embodiment, the indication comprises information related to electric energy used for powering the loT device.

According to an embodiment, the indication comprises an energy request related to at least one of an energy level and duration of a future energy harvest signal to be sent by the node.

According to an embodiment, the transceiver, in operation, receives a request from the node and the circuitry, in operation, generates the indication in response to the reception of the request by the transceiver.

According to an embodiment, the loT device further comprises a power management unit which, in operation, harvests electric energy from an energy harvest signal received from the node.

According to an embodiment, the node is one of a base station and an intermediate node connected to a base station.

According to a second aspect, it is provided a node, comprising a transceiver which, in operation, receives, from an Internet of Things, loT, device an indication related to a future transmission or future reception of data by the loT device and circuitry which, in operation controls the future transmission or future reception of the data according to said indication.

According to an embodiment, the circuitry, in operation, schedules the future transmission or future reception of the data based on the received indication and generates the data based on the scheduling and the transceiver, in operation, transmits the data in accordance with the scheduling.

According to an embodiment, the circuitry, in operation, generates a request for requesting the loT device to transmit at least one of data and the indication and the transceiver, in operation, transmits the request to the loT device.

According to an embodiment, the node is one of a base station and an intermediate node connected to a base station.

According to a third aspect it is provided a communication system comprising the loT device according to first aspect or any embodiment/implementation thereof a node according to the second aspect or any embodiment/implementation thereof.

According to an embodiment, the circuitry mentioned above (in any of the aspects or embodiments of the loT device or the node) is embodied on an integrated circuit. The integrated circuit may also include the transceiver or may include a port connectable to a transceiver. Over the port, the integrated circuit may receive and transmit signals from and to the transceiver, respectively.

According to a fourth aspect, it is provided a method of providing a node, for example, a base station or an intermediate node connected to base station, with an indication from an loT device, wherein the method comprises generating, by circuitry of the loT device, an indication related to a future transmission or future reception of data by the loT device and transmitting, by a transceiver of the loT device, the indication to the node.

According to an embodiment, the indication comprises time related information regarding an operation state of the loT device. The time related information regarding an operation state may include one or more of: time the loT device is to wake up or turn on the transceiver for sending and/or receiving the data, time the loT device is to turn off the transceiver, time the loT device is to transmit and/or receive the data, time the loT device is to have sufficient amount of energy to transmit and/or receive the data, and time interval during which the loT device does not intend to transmit and/or receive the data.

According to an embodiment, the indication comprises information on at least one of a size of the data, periodicity of the data, and/or number of data transmissions and/or receptions.

According to an embodiment, the indication comprises information on a current operation state of the loT device, said operation state indicating at least one of: ready to send and/or receive data, switched off, charging, low battery power, stand by or sleep state.

According to an embodiment, the indication comprises information on a future transition from a current operation state of the loT device to a future operation state of the loT device.

According to an embodiment, the indication comprises information related to electric energy used for powering the loT device.

According to an embodiment, the indication comprises an energy request related to at least one of an energy level and duration of a future energy harvest signal to be sent by the node.

According to an embodiment, the method of the fourth aspect or any embodiment/implementation thereof further comprises receiving, by the transceiver of the loT device, a request from the node and generating, by the circuitry of the loT device, the indication in response to the reception of the request by the transceiver.

According to an embodiment, the method of the fourth aspect or any embodiment/implementation thereof comprises harvesting, by a power management unit of the loT device, electric energy from an energy harvest signal received from the node.

The method of the fourth aspect or any embodiment/implementation thereof may be implemented in the loT device according to the first aspect or any embodiment/implementation thereof.

According to a fifth aspect, it is provided a method of controlling data communication between a node and an loT device comprising receiving, by a transceiver of the node, from the loT device an indication related to a future transmission or future reception of data by the loT device and controlling, by circuitry of the node, the future transmission or future reception of the data according to said indication.

According to an embodiment, the method according to the fifth aspect further comprises scheduling, by the circuitry of the node, the future transmission or future reception of the data based on the received indication and generating, by the circuitry of the node, the data based on the scheduling and transmitting, by the transceiver of the node, the data in accordance with the scheduling.

According to an embodiment, the method according to the fifth aspect or any embodiment/implementation thereof further comprises generating, by the circuitry of the node, a request for requesting the loT device to transmit at least one of data and the indication and transmitting, by the transceiver of the node, the request to the loT device.

The method of the fifth aspect or any embodiment/implementation thereof may be implemented in the node according to the second aspect or any embodiment/implementation thereof.

Moreover, in an embodiment, a computer program is provided including code instructions stored on a non-transitory medium, which when executed on one or more processor, causes the one or more processors to execute a method according to any of the above mentioned embodiments and examples.

## Claims

1. An Internet of Things, loT, device, comprising
circuitry which, in operation, generates an indication related to a future transmission or future reception of data by the loT device; and
a transceiver which, in operation, transmits the indication to a node.

2. The loT device according to claim 1, wherein the indication comprises time related information regarding an operation state of the loT device.

3. The loT device according to claim 2, wherein the time related information regarding an operation includes one or more of:
- time the loT device is to wake up or turn on the transceiver for sending and/or receiving the data,
- time the loT device is to turn off the transceiver,
- time the loT device is to transmit and/or receive the data,
- time the loT device is to have sufficient amount of energy to transmit and/or receive the data, and
- time interval during which the loT device does not intend to transmit and/or receive the data,

4. The loT device according to any of claims 1 to 3, wherein the indication comprises information on at least one of
i) a size of the data,
ii) periodicity of the data, and/or
iii) number of data transmissions and/or receptions.

5. The loT device according to any of claims 1 to 4, wherein the indication comprises information on a current operation state of the loT device, said operation state indicating at least one of: ready to send and/or receive data, switched off, charging, low battery power, stand by or sleep state.

6. The loT device according to any of claims 1 to 5, wherein the indication comprises information on a future transition from a current operation state of the loT device to a future operation state of the loT device.

7. The loT according to any of claims 1 to 6, wherein the indication comprises information related to electric energy used for powering the loT device.

8. The loT device according to any of claims 1 to 7, wherein the indication comprises an energy request related to at least one of an energy level and duration of a future energy harvest signal to be sent by the node.

9. The loT device according to any of the claims 1 to 8, wherein
the transceiver, in operation, receives a request from the node; and
the circuitry, in operation, generates the indication in response to the reception of the request by the transceiver.

10. The loT device according to any of the claims 1 to 9, further comprising
a power management unit which, in operation, harvests electric energy from an energy harvest signal received from the node.

11. The loT device according to any of the claims 1 to 10, wherein the node is one of a base station and an intermediate node connected to a base station.

12. A node, comprising
a transceiver which, in operation, receives, from an Internet of Things, loT, device an indication related to a future transmission or future reception of data by the loT device; and
circuitry which, in operation controls the future transmission or future reception of the data according to said indication.

13. The node according to claim 12, wherein
the circuitry, in operation, schedules the future transmission or future reception of the data based on the received indication and generates the data based on the scheduling; and wherein
the transceiver, in operation, transmits the data in accordance with the scheduling.

14. The node according to claim 12 or 13, wherein
the circuitry, in operation, generates a request for requesting the loT device to transmit at least one of data and the indication; and
the transceiver, in operation, transmits the request to the loT device.

15. The node according to any of claims 1 to 14, wherein the node is one of a base station and an intermediate node connected to a base station.
